(19) Europäisches Patentamt
European Patent Office
Office européen des brevets

(11) Veröffentlichungsnummer: **0 522 474 A2**

## (12) EUROPÄISCHE PATENTANMELDUNG

(21) Anmeldenummer: **92111369.2**

(51) Int. Cl.5: **C08L 27/06**, C08K 5/00

(22) Anmeldetag: **04.07.92**

(30) Priorität: **12.07.91 DE 4123211**

(43) Veröffentlichungstag der Anmeldung:
**13.01.93 Patentblatt 93/02**

(84) Benannte Vertragsstaaten:
**AT BE CH DE ES FR GB IT LI PT SE**

(71) Anmelder: **Ems-Togo AG**
**Hofstrasse 31**
**CH-8590 Romanshorn(CH)**

(72) Erfinder: **Brito Marqina, Jose**
**Aconcagna 22 No. 1**
**Zaragoza(ES)**
Erfinder: **Garcia Ferreira, Juan**
**Urbaniation Santa Fe, Calle 2, No. 19**
**Zaragoza(ES)**

(74) Vertreter: **Deufel, Paul, Dr.**
**Müller-Boré & Partner Patentanwälte**
**Isartorplatz 6 Postfach 26 02 47**
**W-8000 München 2(DE)**

(54) **Vergilbungsbeständig überlackierbare Plastisolzusammensetzung, Verfahren zu ihrer Herstellung und ihre Verwendung.**

(57) Es werden vergilbungsbeständig überlackierbare Plastisol-Zusammensetzungen auf Basis von Homo- oder Copolymeren des Vinylchlorids vorgeschlagen, die neben Additiven nach dem Stand der Technik optische Aufheller und wahlweise starksaure Ionenaustauscher enthalten und für überlackierbare Abdichtungen, spez. Naht- und Falzdichtungen, im Karosseriebau geeignet sind.

EP 0 522 474 A2

EP 0 522 474 A2

Die Erfindung betrifft eine Plastisol-Zusammensetzung, insbesondere auf der Basis von Vinylhomo- oder -copolymeren, ihre Herstellung und Verwendung.

Plastisole werden in grossem Umfang im Karosseriebau verwendet. Die Hauptanwendungen sind: Nahtabdichtungen zwischen Blechen, Klebeverbindungen im Rohbau und in der Lackiererei, Versiegeln von Nähten und Bördelfalzen im Innen- und Aussenbereich, und der Schutz von aussenliegenden Flächen, beispielsweise Unterbodenschutz und Schwellenschutz.

Für diesen Zweck werden heute meist Plastisole auf der Basis von PVC-Polymerisaten oder PVC-Copolymerisaten verwendet, wie sie beispielsweise in der DE-PS 31 11 815 beschrieben werden. Derartige Plastisole bestehen aus feinen Polymerteilchen, die in einem nichtflüchtigen Weichmacher dispergiert sind. Bei Raumtemperatur sind die festen Teilchen in der flüssigen Phase nicht löslich, bei höherer Temperatur, der Geliertemperatur, lösen sich die Polymerteilchen im Weichmacher. Die homogene Lösung verfestigt sich beim Abkühlen zu einem elastischen oder starren Film. Ueblicherweise enthalten die Plastisole Zuschlagstoffe wie Füllstoffe, rheologische Hilfsmittel, Stabilisatoren, Pigmente, Lösungsmittel, wasserabsorbierende Substanzen, Haftvermittler usw. Die Haftvermittler haben die Aufgabe, Haftung zur Oberfläche des jeweiligen Untergrunds zu vermitteln. Beispiele solcher Haftflächen sind nicht entfetteter Rohstahl, verzinkter oder verzinnter Stahl, elektrotauchlackierte Blecke, Aluminium usw.

Haftvermittler für Dichtstoffe oder Beschichtungen sind unter anderem Polyaminoamide, Polyamine, Epoxyharze, Umsetzungsprodukte von Polyaminen und Epoxyharzen, blockierte Isocyanate, organofunktionelle Silane, Gemische von Urotropin und Resorcin, sowie Kombinationen derselben.

Im Fahrzeugbau können Plastisole oder andere Dichtstoffe und Beschichtungsmassen im Rohbau auf die nichtentfetteten Untergründe aufgetragen und anschliessend entfettet, phosphatiert und mit einer Elektrotauchlackierung, die bei Temperaturen über 150°C eingebrannt wird, versehen werden. Meistens werden die Massen auf bereits kataphoretisch grundierte Oberflächen aufgetragen, die Verfestigung erfolgt beim Einbrennen der nachfolgend aufgetragenen Zwischenschicht- oder Decklackierung.

Man stellt häufig fest, dass sich weisse, helle oder pastellfarbene Decklackierungen des Fehrzeuges an denjenigen Stellen gelblich oder bräunlich verfärben, an denen die Decklacke auf die Dichtmassen oder den Unterbodenschutz aufgetragen sind. An den Stellen, wo die Decklacke direkt auf die Grundierung aufgetragen sind, vergilben diese Lacke weit weniger. Derartige störenden Verfärbungen treten unabhängig davon auf, ob die Dichtmasse vor dem Ueberlackieren geliert wurde oder ob nach dem Nass-in-Nass-Verfahren die ungelierte Dichtmasse mit der Decklackierung versehen und erst anschliessend eingebrannt wurde. Die gelbliche Verfärbung tritt erst nach einiger Zeit auf, zum Teil erst nach Wochen oder Monaten. Hohe Feuchte und erhöhte Temperatur beschleunigen die Ausbildung der Verfärbungen.

Ursache der beobachteten Verfärbungen sind unter anderem Amine, die in geringen Mengen an die Oberfläche der Decklacke wandern und sich an der Oberfläche durch oxydative Prozesse in farbgebende Substanzen verwandeln. Diese Amine können aus der elektrophoretischen Beschichtung oder aus Additiven stammen. Die weichmacherhaltigen Dichtstoffe begünstigen die Migration dieser verfärbenden Substanzen an die Oberfläche. Der Decklack über den Dichtstoffen absorbiert Weichmacher, was zur Flexibilisierung der Lackschicht führt und die Diffusion gelöster Substanzen erleichtert. Viele der heute verwendeten Lacksysteme sind säurehärtend, dass heisst, ihre Vernetzung findet unter dem Einfluss von sauren Katalysatoren statt. Dichtstoffe und Beschichtungen enthalten bevorzugt Kreiden oder andere basische Füllstoffe, welche einen Teil dieser sauren Katalysatoren neutralisieren. Die verminderte Konzentration der Katalysatoren über den Dichtstoffen führt zu Decklackfilmen, die weniger vernetzt sind. Damit fördert die niedere Vernetzungsdichte die Diffusion von Verbindungen aus den darunterliegenden weichmacherhaltigen Massen an die Oberfläche.

Es wurde bereits vorgeschlagen, die störenden Amine durch Zugabe von sauren Substanzen im Dichtstoff zu binden. In der DE-PS 38 21 926 werden dem Dichtstoff saure Ionenaustauscher in Pulverform beigegeben. In der DE-OS 38 43 994 werden die potentiell farbgebenden Amine durch Reaktion mit Tanninen gebunden, die dem Plastisol zugesetzt sind. Bei Zugabe saurer Substanzen kann jedoch ein Teil der Haftvermittler in unerwünschter Weise absorbiert werden, so dass die haftvermittelnden Substanzen nicht mehr für die Wechselwirkungen mit den Haftflächen verfügbar sind, z.B. für die Reaktion mit der Elektrotauchlackierung oder verzinktem Stahl.

Feinteilige saure Ionenaustauscher sind nicht nur aus Kostengründen unvorteilhaft. Der Feinstaub solcher Pulver ist für die Atemwege ausserordentlich belästigend und kann zu allergischen Reaktionen führen.

Die Aufgaben der vorliegenden Erfindung war, verbesserte vergilbungsbeständig überlackierbare Dichtmassen oder Beschichtungen für den Fahrzeugbau zu entwickeln und die eingesetzte Menge der pulverförmigen sauren Ionenaustauscher zu vermindern oder durch ein angenehm zu handhabendes, harmloses Hilfsmittel ganz oder teilweise zu ersetzen.

Zur Lösung dieser Aufgaben werden vergilbungsbeständige Plastisolformmassen nach den kennzeichnenden Merkmalen des Anspruchs 1, ihre Herstellung nach dem Verfahren gemäss Anspruch 10 und ihre Verwendung nach Anspruch 13 vorgeschlagen.

Die Lösung betrifft insbesondere Dichtstoffe oder Beschichtungen, die lösliche optische Aufheller enthalten. Diese entfalten ihre Wirkung dadurch, dass sie vom Dichtstoff in den darüberbefindlichen Lack wandern. Dort kompensieren sie die Gelbfärbung der farbgebenden Substanzen, die ebenfalls aus dem darunterliegenden Dichtstoff an die Oberfläche des Lackes wandern.

Es wird ausserdem die synergistische Kombination saurer Ionenaustauscher mit optischen Aufhellern vorgeschlagen.

Optische Aufheller sind Substanzen, die im ultravioletten Teil des Spektrums Strahlung absorbieren und im sichtbaren längerwelligen blauen Teil emittieren. Das absorbierte ultraviolette Licht wird als schwach bläulich Fluoreszenz reflektiert, also in der Koplementärfarbe der Vergilbung. Durch diese optische Wirkung können migrationsfähige Aufheller die Vergilbung kompensieren, insbesondere diejenigen, die durch Oxydationsprodukte von Aminen an der Lackoberfläche entstehen.

Die erfindungsgemässe Plastisol-Zusammensetzung besteht aus einer an sich bekannten Zusammensetzung aus Vinylpolymeren, Weichmachern, Haftvermittlern, Füllstoffen und gegebenenfalls weiteren Hilfsstoffen, die 0,001 bis 0,25 Gew.-%, bevorzugt 0,005 bis 0,075 Gew.-% optische Aufheller sowie in bevorzugter Weise stark saure Ionenaustauscher enthält. Die Vinylpolymeren sind Homopolymere des Vinylchlorids, Copolymere des Vinylchlorids mit Vinylacetat, mit Acrylsäure- oder Methacrylsäureestern mit Alkoholen mit bis zu 8 C-Atomen, bevorzugt mit 1 bis 4 C-Atomen, oder Gemische der Homopolymeren mit Copolymeren.

Die erfindungsgemässen Plastisolzusammensetzungen enthalten 20 bis 60 Gew.-% bekannter Weichmacher, bevorzugt aus der Gruppe Ester aliphatischer u./o. aromatischer Säuren mit mono- oder difunktionellen Alkoholen mit 1 bis 22 C-Atomen, die zusätzlich nach dem Stand der Technik bekannte Sekundärweichmacher enthalten können.

Die für die erfindungsgemäss Plastisolzusammensetzung notwendigen Haftvermittler sind ausgewählt aus der Gruppe der Polyaminoamide,
Polyamine,
Epoxyharze,
blockierte Isocyanate,
organofunktionelle Silane,
Gemische von Urotropin und Resorzin,
sowie Kombinationen derselben.

Die mineralischen oder organischen Füllstoffe oder Pigmente sind die üblichen bekannten Typen des Stands der Technik. Ebenso sind die starksauren Ionenaustauscher vorbeschrieben, z.B. in DE-OL 3 821 926.

Als optische Aufheller eignen sich vor allem Derivate des 4,4'-Diaminostilbens, 4,4'-Distyryl-biphenylen, Methylumbelliferon, Cumarins, Dihydrochinolinons, 1,3-Diarylpyrazolin, Naphthalsäureimid, über CH=CH-Bindungen verknüpfte Benzoxazol-, Benzisoxazol-, Benzimidazolsysteme, durch Heterozyclen substituierte Pyrenderivate. Die Namen entsprechender Handelsprodukte sind dem Kunststoff- oder Lackfachmann bekannt.

Die Konzentration der optischen Aufheller liegt bevorzugt im Bereich von 10 bis 2500 ppm. Besonders bevorzugt sind 50 bis 750 ppm, bezogen auf die gesamte Zusammensetzung.

Die Herstellung von Plastisolen ist Stand der Technik und wird beispielsweise in: Krekeler, Wick, Kunststoff Handbuch (1963), Band 2, Teil 1, Seite 21 ff (W.A. Colomb Verlag, Stuttgart) oder: Becker, Braun, Kunststoff Handbuch (1968) Band 2, Teil 1 und 2, (Hanser Verlag, München, Wien), zusammen mit den dafür verwendeten Vorrichtungen beschrieben.

Im Verfahren zur Herstellung der erfindungsgemässen Plastisol-Zusammensetzung können die optischen Aufheller dem Plastisol in jeder Phase des Herstellungsprozesses oder vor der Verwendung beigegeben werden. Um eine optimale Verteilung sicherzustellen, können die optischen Aufheller der Zusammensetzung als Lösung oder Dispersion in Weichmachern, Lösungsmitteln oder verdünnt mit Füllstoffen beigemischt werden. So erfolgt beispielsweise die Lösung des optischen Aufhellers im Weichmacher bei der Herstellung oder vor der Lagerung bevorzugt bei Raumtemperatur oder aber beim Gelieren in vorteilhafter Weise bei erhöhter Temperatur. Dabei kommen 10 bis 2500 ppm, bevorzugt 50 bis 750 ppm zur Anwendung.

In einer besonderen Ausführungsform werden die starksauren Ionenaustauscher als 10 bis 30%-ige Paste mit Weichmachern eingesetzt, wobei der Anteil an Ionenaustauscher an der Plastisol-Zusammensetzung 0,5 bis 3,0 Gew.-% beträgt, Bevorzugt lassen sich die optischen Aufheller und die starksauren Ionenaustauscher als kit-of-parts einsetzen.

Die erfindungsgemässen Plastisole enthalten beispielsweise folgende Bestandteile in den angegebenen Mengenverhältnissen, wobei sich a) bis e) zu 100 Teilen ergänzen:

a) 10 bis 60 Gew.-Teile eines Homopolymeren des Vinylchlorids, eines Copolymerisats aus Vinylchlorids mit Vinylacetat, mit Acrylsäure- oder Methacrylsäureestern und anderen copolymerisierbaren Monomeren, oder Gemischen solcher Polymerisate, die durch Emulsions-, Mikrosuspensions-, Suspensions-, Lösungs- oder Massenpolymerisation hergestellt wurden.

b) 20 bis 60 Gew.-Teile eines Weichmachers auf Basis von Estern aliphatischer oder aromatischer Mono-, Di- oder Polycarbonsäuren mit mono- oder difunktionellen Alkoholen, die gegebenenfalls Sekundärweichmacher auf Basis von Chlorparafinen, Kohlenwasserstoffen, Fettsäureestern, Sulfonsäureestern, Phosphorsäureestern und dergleichen enthalten.

c) 1 bis 5 Gew.-Teile Haftvermittler

d) 5 - 60 Gew.-Teile mineralische oder organische Füllstoffe oder Pigmente

e) bis 5 Gew.-Teile pulverförmige, starksaure Ionenaustauscher

f) und zusätzlich weitere 10 bis 2500 ppm optische Aufheller, wobei zusätzlich weitere Hilfsmittel wie Stabilisatoren, rheologische Hilfsmittel, Lösungsmittel usw. vorhanden sein können

Gegenstand der Erfindung ist somit insbesondere die Verwendung von optischen Aufhellern zur Herstellung von vergilbungsbeständig überlackierbaren Plastisolen gemäss Anspruch 13.

Die Applikation der Plastisole im Automobilbau durch Extrusion oder Spritzauftrag ist dem Fachmann bekannt. Die Plastisole können vor oder nach Durchgang durch den Gelierofen überlackiert werden, wobei der Lackauftrag mehrschichtig erfolgen kann, beispielsweise mit Füller/Primer, Grundlack und Klarlack.

Die Zusammensetzung und Applikation dieser Lacksysteme sind dem Fachmann ebenso vertraut.

Die Vergilbungsneigung einer über Plastisol aufgetragenen weissen oder hellen Lackoberfläche kann im Prüflabor beschleunigt werden, indem die Prüfbleche, welche das überlackierte Plastisol tragen, bei erhöhter Feuchte, im Dunkeln gelagert werden. Instrumentell kann eine Vergilbung eines weiss überlackierten Plastisols (ohne erfindungsgemässe "Vergilbungsstabilisierung") bei 80°C schon nach einer Woche festgestellt werden, von Auge sichtbar wird die Farbveränderung schon nach 2 Wochen. Zeigt sich nach 8 Wochen Lagerung bei 80°C noch kein von Auge sichtbarer Unterschied zu weissem Lack, kann man annehmen, dass diese Kombination vergilbungsbeständig ist.

Eine Farbe beziehungsweise eine Farbänderung kann mit Hilfe von Remissions-Spektrometern charakterisiert werden. Mit dieser Methode wird der Farbeindruck in einem L, a, b - System (DIN 6174, CIE-LAB 1976) dargestellt. Der "b"-Wert gibt die Lage auf der gelb/blauen Achse an und wird daher als Mass zur Bestimmung von Gelbwerten dienen. Gelbwert-Differenzen von 0,05 können apparativ bestimmt werden.

Im folgenden wird eine Vergilbung als Differenz der "b"-Werte von gealterten und ungealterten Proben angegeben:

(delta)$\Delta$b      = Gelbwert nach Alterung
              - Gelbwert des frisch eingebrannten Lackes

Die nachstehend angeführten Beispiele wurden mit verpastbaren PVC-Pulver hergestellt, alle pulverförmigen Zuschlagstoffe hatten eine Korngrösse von weniger als 80 $\mu$m. Vor der Applikation wurden die Plastisole während minimal 24 Stunden gelagert. Die Plastisole wurden in einer Schichtdicke von 0,25 bis 2,5 mm auf die Oberfläche eines kataphoretisch elektrotauchlackierten Bleches aufgetragen, welches vorgängig während 30 Minuten bei 180°C eingebrannt wurde.

Wurde das Plastisol vor der Ueberlackierung geliert, erfolgte das während 30 Minuten bei 165°C. Bei Applikation der Lacke vor dem Gelieren, das heisst, im Nass-in-Nass-Verfahren, wurde das Gelieren des Plastisols gleichzeitig mit dem Einbrennen des Lackes bei 135°C/30 Min. vorgenommen. Die positive Wirkung der erfindungsgemässen Zusätze war aber nicht davon abhängig, ob vor oder nach Ueberlackierung eingebrannt wurde.

In den nachstehend angeführten Versuchen erfolgte die Ueberlackierung mit einem säurehärtenden, lösungsmittelhaltigen, weissen Decklack auf Basis von mit Melamin vernetzenden Acrylharzen und Alkydharzen in einer Schichtdicke von 40 - 50 $\mu$m.

BEISPIELE

| Versuchsnummer | 00 | 01 | 02 | 03 | 04 |
|---|---|---|---|---|---|
| 1. PVC-Monopolymer | -- | 8 | 8 | 8 | 8 |
| 2. PVC-Copolymer | -- | 5 | 5 | 5 | 5 |
| 3. Weichmacher (DINP) | -- | 28 | 28 | 28 | 28 |
| 4. Polyaminoamid | -- | 2 | 2 | 2 | 2 |
| 5. Gemahlene Kreide | -- | 39 | 39 | 39 | 39 |
| 6. Gefällte Kreide oberflächenbehandelt | -- | 13 | 13 | 13 | 13 |
| 7. Titandioxyd | -- | 2 | 2 | 2 | 2 |
| 8. Calziumoxyd, pulv. | -- | 3 | 3 | 3 | 3 |
| 9. Starksaurer Ionenaustauscher pulverförmig, 20% in DINP | -- | -- | -- | -- | -- |
| Zwischentotal, Gewichtsteile | -- | 100 | 100 | 100 | 100 |
| 10. Optische Aufheller in ppm<br>- UVITEX OB (CIBA-GEIGY AG) | -- | -- | 300 | 600 | 1000 |
| - LEUDOPUR EGM (SANDOZ AG) | -- | -- | -- | -- | -- |
| Resultate : $\Delta$b nach Alterung<br>Referenz : frisch eingebrannter Lack auf Kataphorese-Blech | | | | | |
| Frisch eingebrannt, Raumtemp- | 0.0 | 1.0 | 0.0 | -0.8 | -1.5 |
| Nach 2 Wochen bei 80°C | 0.9 | 1.8 | 1.0 | 0.1 | -0.3 |
| Nach 4 Wochen bei 80°C | 1.6 | 2.4 | 1.6 | 0.9 | 0.4 |
| Nach 8 Wochen bei 80°C | 2.6 | 3.0 | 2.2 | 1.4 | 1.1 |

Bemerkungen:

ad 2. mit 5% Vinylacetat, verpastbar
3. DINP = Diisononylphthalat
4. Umsetzungsprodukt aus dimerisierter Leinölfettsäure mit einem Ueberschuss an Diethylentriamin, Aminzahl 290, 50 %-ige Lösung in Weichmacher
9. Stark saurer Kationentauscher in der H-Form, 4,4 mVal/g, max. Korngrösse 40 $\mu$m 20 %-ige Dispersion in Weichmacher

BEISPIELE

| Versuchsnummer | 05 | 06 | 07 | 08 |
|---|---|---|---|---|
| 1. PVC-Monopolymer | 8 | 8 | 8 | 8 |
| 2. PVC-Copolymer | 5 | 5 | 5 | 5 |
| 3. Weichmacher (DINP) | 26 | 27 | 27 | 28 |
| 4. Polyaminoamid | 2 | 2 | 2 | 2 |
| 5. Gemahlene Kreide | 38 | 38 | 39 | 39 |
| 6. Gefällte Kreide oberflächenbehandelt | 13 | 13 | 13 | 13 |
| 7. Titandioxyd | 2 | 2 | 2 | 2 |
| 8. Calziumoxyd, pulv. | 3 | 3 | 3 | 3 |
| 9. Starksaurer Ionenaustauscher pulverförmig, 20% in DINP | 3 | 2 | 1 | -- |
| Zwischentotal, Gewichtsteile | 100 | 100 | 100 | 100 |
| 10. Optische Aufheller in ppm | | | | |
|    - UVITEX OB (CIBA-GEIGY AG) | -- | -- | -- | -- |
|    - LEUDOPUR EGM (SANDOZ AG) | -- | 150 | 300 | 300 |
| Resultate : $\Delta$b nach Alterung<br>Referenz : frisch eingebrannter Lack auf Kataphorese-Blech | | | | |
| Frisch eingebrannt, Raumtemp. | 0.35 | -0.1 | -0.45 | -1.5 |
| Nach 2 Wochen bei 80°C | 1.35 | 0.8 | 0.25 | 0.9 |
| Nach 4 Wochen bei 80°C | 1.6 | 1.2 | 0.95 | 1.55 |
| Nach 8 Wochen bei 80°C | 2.3 | 1.95 | 1.65 | 2.10 |

Bemerkungen:

ad   2. mit 5% Vinylacetat, verpastbar
      4. Umsetzungsprodukt aus dimerisierter Leinölfettsäure mit einem Ueberschuss an Diethylentriamin, Aminzahl 290, 50 %-ige Lösung in Weichmacher
      9. Stark saurer Kationentauscher in der H-Form, 4,4 mVal/g, max. Korngrösse 40 $\mu$m 20 %-ige Dispersion in Weichmacher

**Patentansprüche**

1. Vergilbungsbeständig überlackierbare Plastisol-Zusammensetzung aus Homo- oder Copolymeren des Vinylchlorids oder ihren Mischungen,
Weichmachern,

Haftvermittlern,

Füllstoffen und

Hilfsstoffen

dadurch gekennzeichnet, dass die Plastisolzusammensetzung zusätzlich optische Aufheller in einer Menge von 0,001 bis 0,25 Gew.-% enthält.

2. Plastisol-Zusammensetzung gemäss Anspruch 1,
dadurch gekennzeichnet,
dass sie aus
a) 10 bis 60 Gew.-Teilen mindestens eines Vinylpolymeren
b) 20 bis 60 Gew.-Teilen Weichmacher,
c) 1 bis 5 Gew.-Teilen Haftvermittler,
d) 5 bis 60 Gew.-Teilen mineralischen oder organischen Füllstoffen und/oder Pigmenten,
e) 0 bis 5 Gew.-Teile starksauren Ionenaustauscher besteht, wobei sich die Bestandteile a) bis e) zu 100 Teilen ergänzen und zusätzlich weitere Hilfsstoffe vorhanden sein können
f) und sie zusätzlich, bezogen auf a) bis e) 10 bis 2500 ppm optische Aufheller enthält.

3. Plastisolzusammensetzung gemäss Anspruch 2,
dadurch gekennzeichnet,
dass das Vinylpolyemre aus Homopolymeren des Vinylchlorids oder Copolymeren des Vinylchlorids mit Vinylacetat oder Gemischen des Homopolymeren mit Copolymeren besteht.

4. Plastisolzusammensetzung gemäss Anspruch 2,
dadurch gekennzeichnet,
dass das Vinylpolymer aus Copolymeren des Vinylchlorids mit max. 20 Mol% Acrylsäureestern und Methacrylsäureestern aliphatischer Alkohole besteht, wobei Alkohole mit bis zu 8 C-Atomen, besonders mit 1 bis 4 C-Atomen bevorzugt sind.

5. Plastisolzusammensetzung gemäss einem der voranstehenden Ansprüche,
dadurch gekennzeichnet,
dass die Weichmacher ausgewählt sind aus der Gruppe Ester aliphatischer u./o. aromatischer Säuren mit mono-oder difunktionellen Alkoholen mit 1 bis 22 C-Atomen.

6. Plastisolzusammensetzung gemäss Anspruch 5,
dadurch gekennzeichnet,
dass der Weichmacher zusätzlich Sekundärweichmacher enthält.

7. Plastisolzusammensetzung gemäss einem der voranstehenden Ansprüche,
dadurch gekennzeichnet,
dass die Haftvermittler ausgewählt sind aus der Gruppe der Polyaminoamide,
Epoxyharze,
blockierte Isocyanate,
organofunktionelle Silane,
Gemische von Urotropin und Resorzin,
sowie Kombination derselben.

8. Plastisolzusammensetzung gemäss einem der voranstehenden Ansprüche,
dadurch gekennzeichnet,
dass die optischen Aufheller ausgewählt sind aus der Gruppe 4,4'-Diaminostilben, 4,4'-Distyryl-biphenylen, Methylumbelliferon, Cumarin, Dihydrochinolinon, 1,3-Diarylpyrazolin, Naphthalinsäureimid, Benzoxazol-, Benzisooxazol, Benzimidazol-Systeme, heterozyclisch substituierte Pyrenderivate.

9. Plastisolzusammensetzung gemäss Anspruch 9,
dadurch gekennzeichnet,
dass sie den optischen Aufheller in Mengen von 0,001 bis 0,25 Gew.%, bevorzugt von 0,005 bis 0,075 Gew.% enthalten.

**10.** Verfahren zur Herstellung von vergilbungsbeständig überlackierbaren Plastisolzusammensetzungen gemäss den Ansprüchen 1 bis 10, dadurch gekennzeichnet, dass einer Zusammensetzung aus
Vinylpolymeren,
Weichmachern,
Haftvermittler,
Füllstoffen, die gegebenenfalls Hilfsstoffe und stark saure Ionenaustauscher enthält,
bei der Herstellung oder vor der Verwendung optischer Aufheller in einer Menge von 10 bis 2500 ppm, bevorzugt 50 bis 750 ppm, zugesetzt werden.

**11.** Verfahren gemäss Anspruch 11,
dadurch gekennzeichnet,
dass die starksauren Ionenaustauscher als 10 bis 30%-ige Paste mit Weichmachern eingesetzt werden, wobei der Anteil der Ionenaustauscher an der Plastisol-Zusammensetzung 0,5 bis 3,0 Gew.-Teile beträgt.

**12.** Verfahren gemäss Anspruch 11 oder 12,
dadurch gekennzeichnet,
dass optische Aufheller und starksaure Ionenaustauscher als kit-of-parts eingesetzt werden.

**13.** Verwendung von optischen Aufhellern zur Herstellung von vergilbungsbeständig überlackierbaren Plastisolzusammensetzungen gemäss Anspruch 10.